Europäisches Patentamt

European Patent Office

Office européen des brevets

(19)

(11) Veröffentlichungsnummer: **0 091 586 B2**

(12) ## NEUE EUROPÄISCHE PATENTSCHRIFT

(45) Veröffentlichungstag der neuen Patentschrift:
09.10.91 Patentblatt 91/41

(51) Int. Cl.⁵: **F16C 13/00, D21G 1/00**

(21) Anmeldenummer: 83102931.9

(22) Anmeldetag: 24.03.83

(54) Walzvorrichtung.

(30) Priorität: 08.04.82 CH 2188/82

(43) Veröffentlichungstag der Anmeldung:
19.10.83 Patentblatt 83/42

(45) Bekanntmachung des Hinweises auf die
Patenterteilung:
07.08.85 Patentblatt 85/32

(45) Bekanntmachung des Hinweises auf die
Entscheidung über den Einspruch:
09.10.91 Patentblatt 91/41

(84) Benannte Vertragsstaaten:
AT BE DE FR GB IT LU SE

(56) Entgegenhaltungen:
DE-A- 2 851 747
DE-A- 3 101 429
DE-C- 2 439 580
FR-A- 2 313 141

(56) Entgegenhaltungen:
FR-A- 2 423 582
GB-A- 1 529 861
GB-A- 2 036 252
GB-A- 2 068 482
GB-A- 2 077 315
GB-A- 2 080 487
US-A- 4 074 624
US-A- 4 222 255
"Metall", Dezember 1976, Seiten 1179-1183

(73) Patentinhaber: SULZER-ESCHER WYSS AG
Hardstrasse 319
CH-8023 Zürich (CH)

(72) Erfinder: Schnyder, Eugen
Rigiblick 521
CH-8913 Ottenbach (CH)

(74) Vertreter: Paschedag, Hansjoachim et al
c/o Sulzer - Escher Wyss AG Patentabteilung
Postfach
CH-8023 Zürich (CH)

EP 0 091 586 B2

**Beschreibung**

Die Erfindung betrifft eine Walzvorrichtung zum Walzen von bahnförmigem Material mit einem Walzgerüst, in dem zwei, einen Walzspalt bildende, in einer Presseben auf das Material wirkende Arbeitswalzen und gegebenenfalls Stützwalzen angeordnet sind, wobei wenigstens eine der Walzen als Durchbiegungseinstellwalze mit einem im Walzgerüst abgestützten Träger und einem um den Träger drehbaren und auf dem Träger mittels mit einem Druckmittel versorgter hydrostatischen Stützelemente abgestützten und in der Pressebene beweglichen Walzenmantel ausgebildet ist, und wobei entlang der Breite des bahnförmigen Materials mehrere Dickenmessgeber angeordnet sind, welche mittels einer Regeleinrichtung zur Einstellung eines vorgegebenen Dickenprofils des bahnförmigen Materials nach dem Verlassen des Walzspaltes den Druck des Druckmittels in den einzelnen hydrostatischen Stützelementen derart steuern, dass ein vorgegebenes Dickenprofil eingehalten wird.

Walzvorrichtungen dieser Art dienen dazu, Metallbänder, Plastikfolien oder andere plastisch verformbare Materialien auf eine bestimmte Dicke zu walzen. Die Walzvorrichtung kann dabei im einfachsten Fall aus zwei Arbeitswalzen bestehen. Zusätzlich können in der Pressebene weitere Stützwalzen vorgesehen sein, z.B. zwei Stützwalzen bei einem Quarto-Walzgerüst, oder weitere in der Pressebene oder seitlich angeordnete Stützwalzen. Die Ausbildung der Arbeitswalzen oder einer oder mehrerer Stützwalzen als Durchbiegungseinstellwalze, wie beispielsweise aus US-A-4 222 255 bekannt, hat sich dabei als sehr vorteilhaft erwiesen, um auf das Walzgut einen definierten und einstellbaren Druck auszuüben.

Ein Problem bei solchen Walzvorrichtungen ist die Einhaltung einer vorgegebenen Dicke der gewalzten Materialbahn. Ueblicherweise erfolgt diese Dickenregelung, wie beispielsweise in US-A-4 074 624 beschrieben, durch Abtastung des Materialdickenprofils nach dem Auslauf aus dem Walzspalt mit einem Dickensensor, der eine Regeleinrichtung für den Druck des Druckmittels in den einzelnen hydrostatischen Stützelementen der Durchbiegungseinstellwalze so steuert und nachregelt, dass die Materialdicke konstant gehalten wird. Nachteilig ist hierbei, dass die Dickenabtastung in einer gewissen Entfernung vom Walzspalt und somit mit einer gewissen Zeitverzögerung erfolger muss. Bei schnellaufenden Walzvorrichtungen ist daher die Regelung nicht schnell genug und es treten Dickenschwankungen auf, bzw. es erweist sich als unmöglich, die Walzgeschwindigkeit über ein bestimmtes Mass zu steigern.

Um diesen Nachteil zu vermeiden, wurde versucht, den Walzspalt ohne Zeitverzögerung durch indirekte Messung an Messpunkten im Walzgerüst zu bestimmen, z.B. durch Messung der Position der Anstellzylinder für die Stützwalzen oder deren Lagerzapfen, wie z.B. in der DE-A-2 439 580 oder der GB-A-1 529 861 beschrieben, oder durch Messung an der Lagerbüchse des Walzenmantels oder relativ zum Träger nach GB-A-2 068 482. Nachteilig ist hierbei, dass elastische Verformungen der Walzen, des Trägers, der Lagerzapfen und des Gerüstes, bzw. Lager-Rundlauf-Fehler in die Messung eingehen und das Ergebnis verfälschen. Auch die direkte Abstandsmessung der Stützwalzen unter Umgehung der Gerüst-Dehnung enthält noch die elastischer Anteile der Walzenverformung. Ausserdem ist eine Regelung eines bestimmten Dickenprofils über die Bahnbreite mittels der seitlichen Messvorrichtungen nicht ohne weiteres möglich. Eine direkte Abstandsmessung der Arbeitswalzen hat wiederum den Nachteil, dass die Fühler sämtlichen Umwelteinflüssen ausgesetzt sind, beispielsweise Metallflitter, Walzöl, Schmutz und einer Temperatureinwirkung unterliegen. Bei dem häufig notwendigen Wechsel der Arbeitswalzen besteht überdies eine Gefahr der Beschädigung.

In der DE-A-2 851 747 ist eine Walzvorrichtung beschrieben, bei der die Position der Walzenmantel-Innenseite mit einer Reihe von Sensoren auf einer Traverse bestimmt wird, die eine Anzahl von auf einem Träger angeordneten Elektromagneten ansteuern, welche auf die dem Pressspalt entgegengesetzte Seite des Walzenmantels eine Anziehungskraft ausüben. Da die Kraftübertragung über den bei Kraftänderungen elastisch verformten Walzenmantel erfolgt, ist die Regelung entsprechend zeitverzögert, und zudem gehen auch hier Verformungen der Traverse und des Gerüstes in die Messung ein.

Die vorliegende Erfindung bezieht sich auf die Aufgabe, die erwähnten Nachteile des Standes der Technik zu vermeiden und insbesondere eine Walzvorrichtung zu schaffen, bei der die Dicke des gewalzten Materiales ohne Zeitverzögerung und unter weitgehender Ausschaltung elastischer Verformungen des Walzgerüstes sicher, schnell, vor Umwelteinflüssen geschützt und ohne die Gefahr einer Beschädigung der Regeleinrichtung nachgeregelt werden kann, sowie ein bestimmtes Dickenprofil über die Bahnbreite aufrechterhalten wird.

Diese Aufgabe wird erfindungsgemäss dadurch gelöst, dass an jedem des beiden seitlichen Rändes des Walzenmantels ein Positionsgeber zur Messung der Position der dem Träger zugekehrten Innenseite des Walzenmantels in der Pressebene an der dem Walzspalt zugekehrten Seite gegen eine mit dem Walzgerüst verbundene Basis vorgesehen ist, von dessen Ausgangswert mittels der Regeleinrichtung der Druck des Druckmittels der hydrostatischen Stützelemente so beeinfluss wird, dass die Position des Walzenmantels einen vorgegebenen Wert einnimmt, wobei der oder die Positionsgeber an einem seitlichen Rand des Walzenmantels in axialer Richtung ausserhalb der Lage der äusseren Stützelemente angeordnet sind und entweder die Position der Walzenmantels-Innenseite in bezug auf einen bestimmten Punkt eines Einbaustücks oder der Einbaustücke messen, in denen der Träger im Walzgerüst gelagert ist, oder unter Vermeidung eines Einbaustückes direkt in bezug auf den Ständer des Walzgerüstes.

Bei der Ausbildung einer Stützwalze als Durchbiegungseinstellwalze wurde es damit möglich, den Messpunkt für die Positionsmessung möglichst nahe an die Arbeitswalze und den Walzspalt zu verlegen, unter Vermeidung von Umwelteinflüssen und unter Ausschaltung der elastischen Verformung des Walzgerüstes. Da die Messung direkt am Mantel der Stützwalze erfolgt, der in direktem Kontant mit der Arbeitswalze ist, wird ebenfalls die Verformung des Stützwalzenträgers eliminiert. Der gleiche Vorteil wird bei Ausbildung einer Arbeitswalze als Durchbiegungsausgleichswalze erreicht. Zweckmässig ist es auch, die an beiden Seiten der Durchbiegungseinstellwalze vorgesehenen Positionsgeber und die Regeleinrichtung so auszubilden, dass die beiden Positionsgeber mehrere Zonen von Stützelementen getrennt ansteuern

Vorteilhafterweise können auch beide Arbeits- oder Stützwalzen als Durchbiegungseinstellwalzen mit zugehörigen Positionsgebern ausgebildet sein, wobei die Positionsgeber beider Durchbiegungseinstellwalzen auf eine gemeinsame Basis, beispielsweise das Einbaustück einer der Walzen, bezogen sind. Stattdessen können die beiden Positionsgeber jedoch auch völlig von den Einbaustücken gelöst und gegenüber dem Walzgerüst-Ständer fixiert sein. Dabei dient das Ständerzwischenstück zur mechanischen Verbindung.

Die Erfindung wird anhand der in den Figuren dargestellten Ausführungsbeispiele erläutert.

Es zeigen:

Fig. 1 eine Walzvorrichtung im Schnitt in der Pressebene,

Fig. 2 einen Positionsgeber und dessen Anordnung im Schnitt,

Fig. 3 eine Walzvorrichtung im Schnitt senkrecht zur Pressebene,

Fig. 4 ein zweites Beispiel einer Walzvorrichtung im Ausschnitt,

Fig. 5 eine Walzvorrichtung mit zugehöriger Regeleinrichtung.

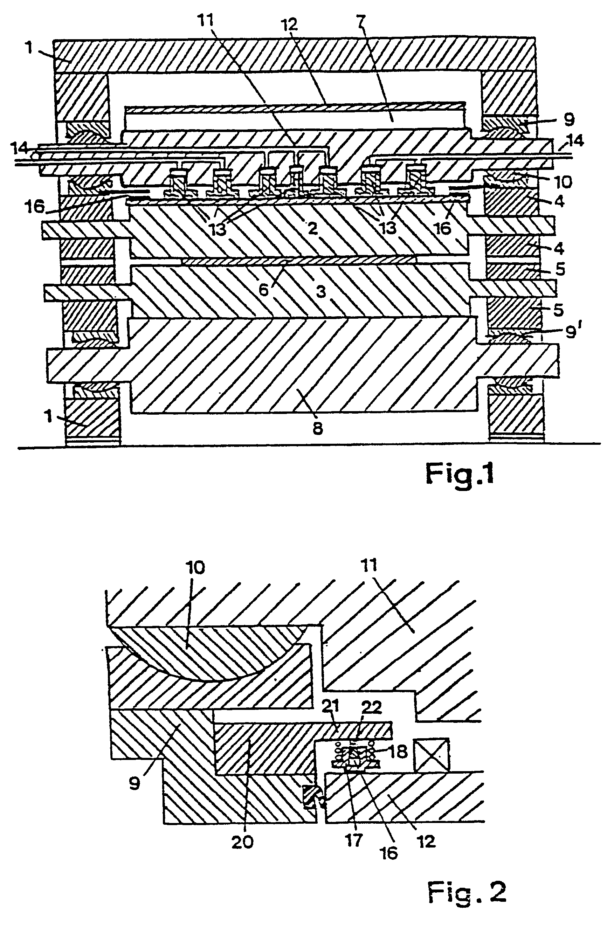

Bei der in den Figuren 1 - 3 dargestellten Walzvorrichtungen besteht das Walzgerüst aus einem Ständer 1, in dem zwei Arbeitswalzen 2 und 3 mittels Einbaustücken 4, 5 drehbar gelagert sind. Zwischen den Arbeitswalzen 2, 3 wirt ein Walzspalt 6 gebildet. Diese Arbeitswalzen 2, 3 werden durch zwei beidseits in der Pressebene A angeordnete Stützwalzen 7, 8, die wiederum mittels Einbaustücken 9, 9' im Ständer 1 gelagert sind, beim Walzvorgang gegeneinandergepresst.

Die Stützwalze 7 ist als Durchbiegungseinstellwalze ausgebildet und besteht aus einem feststehenden Träger 11, der in einem Gelenklager 10 im Einbaustück 9 gelagert ist, und einem um den Träger 11 rotierbaren Walzenmantel 12, der auf dem Träger 11 mittels hydrostatischer Stützelemente 13 abgestützt ist, die über Leitungen 14 mit einem Druckmittel versorgt werden. Durch den Druck dieses Druckmittels wird der Walzenmantel 12 in der Pressebene auf die Arbeitswalze 2 gedrückt. Die hydrostatischen Stützelemente 13 können beispielsweise gemäss US-A-3 802 044 ausgeführt und mit in einem Zylinder beweglichen, über Bohrungen damit verbundenen Drucktaschen aufweisenden Stützkolben versehen sein, jedoch sind auch andere bekannte Ausführungen verwendbar, insbesondere auch einfachere Ausführungen, bei denen die Stützelemente aus einer oder mehreren Druckkammern zwischen Träger und Walzenmantel ohne bewegliche Stempel bestehen.

Die andere Stützwalze 8 kann als konventionelle Metallwalze ausgeführt sein, oder ebenfalls als Durchbiegungseinstellwalze mit einem rotierenden Walzenmantel 14, analog zur oberen Stützwalze 7. Statt der Stützwalzen können auch die Arbeitswalzen 2, 3 als Durchbiegungseinstellwalzen ausgeführt sein.

Die Regelung der Oeffnung des Walzspaltes 6 und somit der Dicke des gewalzten Materials erfolgt über einen Positionsgeber 16, der die Position der dem Träger 11 zugekehrten Innenseite des Walzenmantels 12 misst. Zweckmässigerweise ist je ein solcher Positionsgeber an beiden äusseren Rändern des Walzenmantels 12 vorgesehen und mit einer Regeleinrichtung verbunden. Die Verwendung der Position der Walzenmantelinnenfläche als Regelgrösse hat dabei den Vorteil, dass weder elastische Dehnungen der Stuhlung und der Einbaustücke, noch die Durchbiegung der Stützwalzen in das Ergebnis eingehen, sondern nur die vergleichsweise geringe und nahezu vernachlässigbare Abplattung der Arbeitswalzen. Andererseits ist der Positionsgeber vor Umwelteinflüssen beim Walzvorgang geschützt. Ebenso besteht keine Gefahr einer Beschädigung bei der Auswechslung der Arbeitswalzen.

Als Positionsgeber können im Prinzip beliebige Weggeber dienen, beispielsweise solche mit berührungsloser Messung. Fig. 2 zeigt Aufbau und Anordnung eines geeigneten induktiv arbeitenden Positionsgebers 16 im Detail. Dieser weist einen mit dem Einbaustück 9 verbundenes Befestigungsstück 20 mit einem Fortsatz 21 auf, der den eigentlichen, induktiv arbeitenden Messgeber 22 trägt. Dessen hülsenförmiges Gegenstück 17 wird mittels einer Schraubenfeder 18 an eine glatte Lauffläche an der Innenseite des Walzenmantels 12 angedrückt. Dabei wird der Abstand des Messgebers 22 vom Gegenstück 17 gemessen und ein entsprechendes Ausgangssignal an die Regeleinrichtung gegeben.

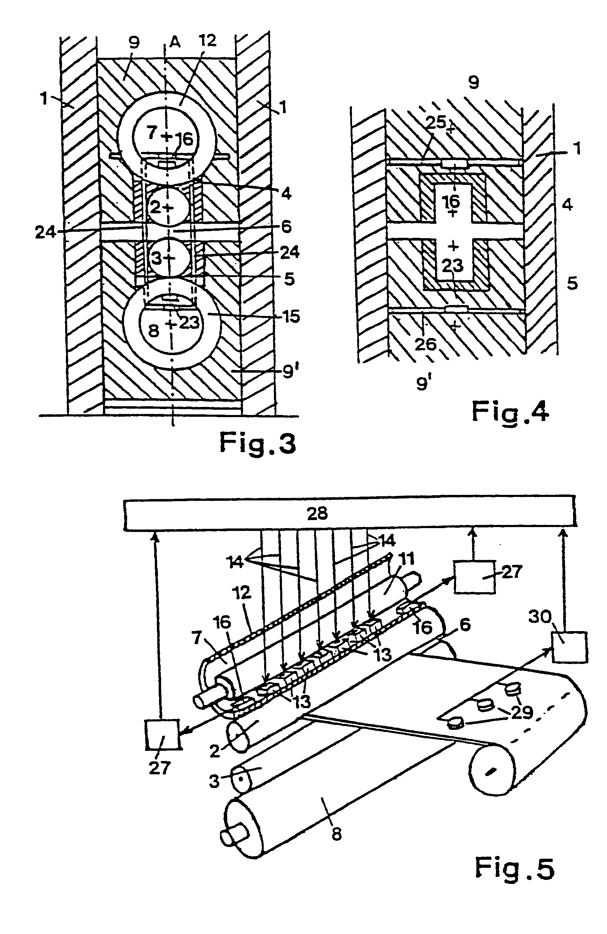

Im Beispiel nach Fig. 3, bei dem beide Stützwalzen 7, 8 als Durchbiegungseinstellwalzen ausgebildet sind, ist je ein Positionsgeber 16, 23 an den Walzenmänteln 12, 15 beider Stützwalzen 7, 8 vorgesehen. Während der Positionsgeber 16 der oberen Walze 7 wiederum das zugehörige Einbaustück 9 als Basis benützt, ist der Positionsgeber 23 der unteren Stützwalze 8 vom zugehörigen Einbaustück 9′ isoliert und stützt sich stattdessen über eine mechanische Verbindung 24 auf die gleiche Basis ab, wie der obere Positionsgeber 16. Deformationen der Einbaustücke werden damit eliminiert.

Beim Beispiel nach Fig. 4 wird der Einfluss der Einbaustücke dadurch eliminiert, dass die beiden Positionsgeber 16, 23 mittels Klemmvorrichtungen 25, 26 mechanisch oder hydraulisch im Ständer 1 des Walzgerüstes verklemmt werden. Das Ständerzwischenstück zwischen den Klemmvorrichtungen 25, 26 dient hierbei zur mechanischen Verbindung und zur Uebertragung des Positionswertes. Da die Ständerdeformation zwischen diesen beiden Punkten nur gering ist, wird das Messresultat nur wenig durch Verformungen beeinflusst. Allenfalls ist eine rechnerische Kompensation leicht möglich. Es kann auch ein Positionsgeber im Ständer verklemmt werden und der andere, wie in Figur 3, über eine mechanische Verbindung auf den ersten Geber abgestützt sein.

In Fig. 5 ist die Walzvorrichtung zusammen mit einer Regeleinrichtung dargestellt. Identische Bauteile sind hierbei mit den gleichen Bezugsziffern versehen, wie in den vorangegangenen Figuren.

Die beiden Positionsgeber 16 steuern hierbei zwei Positionsregler 27 an, die ein Stellsignal an eine Druckregeleinrichtung 28 weitergeben. Von diesen Einrichtung wird der Druck in den Druckleitungen 14 für die Druckmittelzufuhr zu den hydrostatischen Stützelementen 13 gesteuert, und zwar derart, dass der Sollwert der Position des Walzenmantels 12 erreicht wird. Die dazu erforderlichen Steuer- und Regeleinrichtungen sind dem Fachmann bekannt und werden in Walzwerken verwendet, wobei die Ansteuerung in konventioneller Weise gemäss dem Stand der Technik erfolgt.

Zusätzlich zu der beschriebenen, sehr schnell arbeitenden Regelung sind über die Bahnbreite verteilt Dickenmessgeber 29 am Materialauslauf vorgesehen, die über einen Walzspaltregler 30 entweder die gleiche Druckregeleinrichtung 28 ansteuern, oder unabhängig davon die Anstellkraft der Walzen gegeneinarder nachregeln, bzw. den vorgegebenen Sollwert für die Position des Walzenmantels liefern. Auf diese Weise wird eine besonders genaue Einhaltung der Materialbahndicke erreicht.

Die Dickenmessgeber können auch durch einen über die Bahnbreite hin- und herlaufenden und dabei die Materialdicke registrierenden Dickenfühler gebildet sein.

## Patentansprüche

1. Walzvorrichtung zum Walzen von bahnförmigem Material mit einem Walzgerüst (1), in dem zwei, einen Walzspalt (6) bildende, in einer Pressebene (A) auf das Material wirkende Arbeitswalzen (2,3) und gegebenenfalls Stützwalzen (7,8) angeordnet sind, wobei wenigstens eine der Walzen (7) als Durchbiegungseinstellwalze mit einem im Walzgerüst abgestützten Träger (11) und einem um den Träger drehbaren und auf dem Träger mittels mit einem Druckmittel versorgter hydrostatisches Stützelemente (13) abgestützten und in der Pressebene beweglichen Walzenmantel (12) ausgebildet ist und wobei entlang der Breite des bahnförmigen Materials Dickenmessgeber (29) angeordnet sind, welche mittels einer Regeleinrichtung (28) zur Einstellung eines vorgegebenen Dickenprofils des bahnförmigen Materials nach dem Verlassen des Walzspaltes den Druck des Druckmittels in den einzelnen hydrostatischen Stützelementen (13) derart steuern, dass ein vorgegebenes Dickenprofil eingehalten wird, dadurch gekennzeichnet, dass an jedem der beiden seitlichen Rändes des Walzenmantels (12) ein Positionsgeber (16, 23) zur Messung der Position der dem Träger (11) zugekehrten Innenseite des Walzenmantels (12) in der Pressebene (A) an der dem Walzspalt zugekehrten Seite gegen eine mit dem Walzgerüst verbundene Basis (22) vorgesehen ist, von dessen Ausgangswert mittels der Regeleinrichtung (28) der Druck des Druckmittels der hydrostatischen Stützelemente (13 ) so beeinflusst wird, dass die Position des Walzenmantels (12) einen vorgegebenen Wert einnimmt, wobei der oder die Positionsgeber ( 16, 23 ) an einem seitlichen Rand des Walzenmantels ( 12 ) in axialer Richtung ausserhalb der Lage des äussersten Stützelementes angeordnet sind und entweder die Position der Walzenmantel-Innenseite in bezug auf einen bestimmten Punkt eines Einbaustücks (9) oder der Einbaustücke messen, in denen der Träger (11) im Walzgerüst (1) gelagert ist, oder unter Vermeidung eines Einbaustückes (9) direkt in bezug auf den Ständer (1) des Walzgerüstes.

2. Vorrichtung nach Anspruch 1, dadurch gekennzeichnet, dass die Arbeitswalzen als Durchbiegungseinstellwalzen ausgebildet sind.

3. Vorrichtung nach Anspruch 1, dadurch gekennzeichnet, dass beide je einer Arbeitswalze (2,3) zugeordneten Stützwalzen (7,8) als Durchbiegungseinstellwalzen ausgebildet sind und dass für beide Stützwalzen (7,8) wenigstens je ein Positionsgeber (16,23) vorgesehen ist.

4. Vorrichtung nach einem der Ansprüche 1 bis 3, dadurch gekennzeichnet, dass wenigstens ein Positionsgeber (16,23) gegenüber dem Ständer (1) mechanisch oder hydraulisch verspannt ist.

5. Vorrichtung nach einem der Ansprüche 2 bis 4, dadurch gekennzeichnet, dass die beiden Positionsgeber (16,23) derart mechanisch miteinander verbunden sind, dass die Position der beiden Walzenmantel-Innenseiten in bezug auf die gleiche Basis (9) gemessen wird.

6. Vorrichtung nache einem der Ansprüche 1 bis 5, dadurch gekennzeichnet, dass der oder die Positionsgeber (16,23) als induktiv arbeitende Abstandmesseinrichtungen (22) ausgebildet sind.

7. Vorrichtung nach Anspruch 6, dadurch gekennzeichnet, dass die induktive Abstandsmesseinrichtung (22) ausgebildet ist, den Abstand zu einem an eine Lauffläche an der Innenseite des Walzenmantels (12) angedrückten Gegenstück (17) zu messen.

8. Vorrichtung nach einem der Ansprüche 1 bis 7, dadurch gekennzeichnet, dass die hydrostatischen Stützelemente (13) einen in einem mit Druckmittel versorgten Zylinder bewegbaren Stützkolben aufweisen, der mit Drucktaschen versehen ist, die über Bohrungen mit dem Zylinder in Verbindung stehen.

## Claims

1. Roll device for the rolling of strip-shaped material with a roll stand (1), in which two working rolls (2, 3) acting on the material in a pressing plane (A), and forming a roll gap (6), and backing rolls (7, 8) if necessary are arranged, wherein at least one of the rolls (7) is constructed as deflection adjustment roll with a carrier (11) supported in the roll stand and with a roll shell (12) rotatable about the carrier and supported on the carrier by means of hydrostatic support elements (13) provided with a pressure medium, which is movable in the pressing plane, and wherein along the width of the strip-shaped material thickness measurement indicators (29) are arranged, which by means of a regulating mechanism (28) for setting a predetermined thickness profile of the strip-shaped material after leaving the roll gap control the pressure of the pressure medium in the individual hydrostatic support elements (13) such that a preset thickness profile is maintained, characterized in that on each of the two lateral rims of the roll shell (12) a position indicator (16, 23) is provided for the measurement of the position of the inner side of the roll shell (12) facing the carrier (11) in the pressing plane (A) on the side facing the roll gap against a base (22) connected with the roll stand, by the output value of which by means of the regulating mechanism (28) the pressure of the pressure medium of the hydrostatic support elements (13) is influenced such that the position of the roll shell (12) assumes a predetermined value, wherein the position indicators (16, 23) are arranged on a lateral rim of the roll shell (12) in axial direction outside of the position of the outermost support element, and either measure the position of the inner side of the roll shell in relation to a specific point on the structural part or structural parts (9) in which the carrier (11) is supported in the roll stand (1), or by avoiding any structural part (9), directly in relation to the upright (1) of the roll stand.

2. Device according to Claim 1, characterized in that the working rolls are constructed as deflection adjustment rolls.

3. Device according to Claim 1, characterized in that both backing rolls (7, 8), which are each associated with a working roll (2, 3), are constructed as deflection adjustment rolls and that for both backing rolls (7, 8) at least one position indicator (16, 23) is provided in each case.

4. Device according to one of Claims 1-3, characterized in that at least one position indicator (16, 23) is mechanically or hydraulically braced with respect to the upright (1).

5. Device according to one of Claims 2-4, characterized in that the two position indicators (16, 23) are connected with each other mechanically in such a way that the position of the two roll shell inner sides is measured in relation to the same base (9).

6. Device according to one of Claims 1-5, characterized in that the position indicator or indicators (16, 23) are constructed as an inductively operating distance measuring mechanism (22).

7. Device according to Claim 6, characterized in that the inductive distance measuring mechanism (22) is constructed to measure the distance from a counterpart (17) pressed against a contact surface on the inner side of the roll shell (12).

8. Device according to one of Claims 1-7, characterized in that the hydrostatic support elements (13) have a supporting piston movable in a cylinder supplied with pressure medium, and which piston is provided with pressure pockets, which communicate with the cylinder via bores.

## Revendications

1. Dispositif de laminage pour le laminage d'un matériau en bande, comprenant une cage de laminage (1), dans laquelle sont disposés deux cylindres de travail (2, 3), formant une fente de laminage (6) et agissant, dans un plan de pression (A), sur le matériau, ainsi qu'éventuellement des cylindres d'appui (7, 8), cependent qu'au moins un des cylindres (7) est conçu comme un cylindre à flèche réglable avec un support (11) appuyé dans la cage de laminage et avec une chemise (12) de cylindre, tournant autour du support et appuyée sur le support au moyen d'éléments d'appui (13) hydrostatiques alimentés avec un fluide sous pression et mobiles dans le plan de pression, dans lequel des capteurs d'épaisseur (29) sont placés le long de la largeur du matériau en bande qui commandent, au moyen du régulateur (28) pour le réglage d'un profil d'épaisseur, fixé à l'avance, du matériau en bande ayant quitté la fente de laminage, la pression du fluide sous pression dans les différents éléments hydrostatiques d'appui (13), de manière à maintenir un profil d'épaisseur fixé à l'avance, caractérisé en ce qu'on prévoit sur chacun des deux bords latéraux de la chemise (12) de cylindre un capteur de position (16 , 23) pour la mesure de la position de la face intérieure -tournée vers le support (11)- de la chemise (12) de cylindre dans le plan de pression (A), sur la face tournée vers la fente de laminage, par rapport à une base (22) liée à la cage de laminage, dont la valeur de sortie agit, au moyen du régulateur (28), sur la pression du fluide sous pression des éléments d'appui hydrostatiques (13) de telle sorte que la position de la chemise (12) de cylindre prend une valeur fixée à l'avance, dans lequel les capteurs de position (16, 23) sont placés sur le bord latéral de la chemise (12) de cylindre en dehors de la position de l'élément d'appui le plus éloigné dans la direction axiale et ou mesurent la position de la face intérieure de la chemise de cylindre par rapport à un point précis de la pièce de montage ou des pièces de montage (9) dans lesquels le support (11) est appuyé dans la cage de laminage, ou mesure la position de la face intérieure de la chemise de cylindre directement par rapport au montant (1) de la cage de laminage, en évitant la pièce de montage (9).

2. Dispositif suivant la revendication 1, caractérisé en ce que les cylindres de travail sont à flèche réglable.

3. Dispositif suivant la revendication 1, caractérisé en ce que les deux cylindres d'appui (7,8), attribués chacun à un cylindre de travail (2,3), sont à flèche réglable et qu'on prévoit pour chacun d'eux (7,8) au moins un capteur de position (16,23).

4. Dispositif suivant une des revendications 1 à 3, caractérisé en ce qu'au moins un capteur de position (16, 23) est serré mécaniquement ou hydrauliquement par rapport au montant (1).

5. Dispositif suivant une des revendications 2 à 4, caractérisé en ce que les deux capteurs de position (16, 23) sont reliés entre eux mécaniquement de sorte que la position des deux faces intérieures de la chemise de cylindre est mesurée par rapport à la même base (9).

6. Dispositif suivant une des revendications 1 à 5, caractérisé en ce que le ou les capteurs de position (16, 23) sont conçus comme des distancemètres à induction (22).

7. Dispositif suivant la revendication 6, caractérisé en ce que le distancemètre à induction (22) est conçu pour mesurer la distance par rapport à une pièce antagoniste (17) appuyée sur une surface de déplacement placée sur la face intérieure de la chemise (12) de cylindre.

8. Dispositif suivant une des revendications 1 à 7, caractérisé en ce que les éléments d'appui (13) hydrostatiques comportent un piston d'appui, mobile dans un cylindre alimenté en fluide sous pression, ce piston étant muni de poches de compression, qui sont en liaison, par des orifices, avec le cylindre.

Fig.1

Fig. 2

Fig.3

Fig.4

Fig.5